# EUROPEAN PATENT SPECIFICATION

(11) **EP 3 002 565 B1**
(45) Date of publication and mention of the grant of the patent: **08.03.2017**
(21) Application number: 15191556.8
(22) Date of filing: 25.01.2013
(51) Int. Cl.: G01F 3/22, G01F 15/14

(54) **GAS METER**
GASMESSGERÄT
COMPTEUR DE GAZ

(30) Priority: 30.01.2012 IT MI20120109
(43) Date of publication of application: 06.04.2016
(62) Divisional of application: 13702952.6
(73) Proprietor: Pietro Fiorentini S.p.A., 36057 Arcugnano (VI) (IT)
(72) Inventor: INVERNIZZI, Paolo, 20088 Rosate (Milano) (IT); RHO, Luigi, 27022 Casorate (Pavia) (IT)
(74) Representative: Piovesana, Paolo

(56) References cited:
- DE-A1-102007 017 490
- GB-A- 2 317 273
- US-A- 5 365 785

## Description

The present invention relates to gas meters for domestic or industrial use.

More particularly, the present invention relates to flow meters for gas wherein the electrical cable, which connects the internal electrical/electronic modules of measurement and shut-off (if present) with the external ones, exits from said meter in proximity of the plane of joining of the upper half-case and the lower one forming the container of the same system measurement of the meter.

Gas meters are membrane flow meters made up of two half-cases, clamped (seamed) one to the other along the horizontal perimeter edge, in whose interior a measurement unit is placed, formed by two "measurement chambers" of very specific volume with deformable walls, which fill up and empty alternately, whose rectilinear movement is transformed into a rotary movement by a crank gear and transmitted to a small pinion which drives the drums of the totaliser which is placed on the exterior of the container of the measurement unit.

As is known, there is currently a European project which foresees the replacement of the aforementioned membrane gas meters of traditional type with new-generation meters having additional functions created by means of mechanical/electrical/electronic modules.

In this latter type of meter the measurement of the flow of gas supplied is performed by means of one or more mechanical/electrical/electronic modules of measurement and shut- off (when necessary) contained inside the meter, while the reading of the measurement is visualised by a display and/or by a counter placed on a mechanical/electrical/electronic module mounted on the outer wall of the container of the meter itself.

The necessary electrical connection of the electrical/electronic module of measurement and shutoff (when present), inside the container, with the one placed outside is performed by means of an electrical cable passing through a hole formed in the front wall of one of the two half-cases of the meter. Said cable is also inserted in a tear-resistant cable gland (otherwise also known as cable fitting) which has the function of passing the insulated cable through the abovementioned wall of the meter and of avoiding possible tears of the sheath of insulation of the cable. Moreover said cable gland has the function of tightening and blocking the cable against the case of the meter, also creating gas tightness. In fact said cable gland, which can be made in metal material or in plastic material, has a threaded end which is inserted in the aforementioned hole and blocked on the external part of the meter by means of a threaded metal nut (or ring nut). The gas tightness inside said cable gland is instead ensured by a rubber ring (first solution) or a resin core (second solution) present in its interior.

These known solutions have however some disadvantages. In the first solution the resistance to high temperatures is not guaranteed for the materials used (seal in rubber and body of the cable gland in plastic) as also required by European standards, for example EN 1359, according to which a maximum defined leak of gas is admitted from the container of the system of measurement and shutoff (when present), when exposed to high temperatures (650°C). Moreover the cost of the operations of assembly is high.

In the second solution the total cost of the application is high also in relation to the time necessary for the assembly.

GB 2317273 describes a flow indicator (counter) for water formed by two half-cases (whereof one made of glass), wherefrom a plurality of cylindrical electrical wires exit traversing the indicator, passing through a plug or cable fitting which is arranged in an opening formed in a side wall at the base of one of the two half-cases. The insulation portion of cable passing in the sealant is removed for the purpose of preventing the entry of moisture in the counter which would prevent or limit the reading thereof.

This teaching if it is applied to meters of fuel or comburent gas would increase in a relevant manner the risk of accidental explosion.

Moreover the use of a cable fitting in rubber, and of a chassis in plastic as spacer of the upper body 11 from the lower one 12, would not guarantee the resistance to high temperatures (650°C) for the materials used as required instead by the aforementioned European standards relating to meters of natural gas. DE 102007017490 describes a flow meter for natural gas formed by two half-shells wherein the flat electrical cable coming from the measurement unit exits from the container through an opening formed in the side wall of the upper half-shell at the area intended to be occupied by the indicator (counter).

This solution is disadvantageous in that the presence of an additional opening, in the side walls of the case, increases the possibility of gas leaks from the same case and consequently the related risks. Moreover the process for producing this flow meter is not veiy practical in that it is necessary to provide both a phase of obtaining of the opening and a further phase of sealing of this opening with appropriate sealant, lengthening the times of production and installation of the measurement appliance.

The objective of the present invention is that of overcoming, at least in part, the disadvantages of the prior art by providing a gas flow meter wherein the electrical cable exits from said meter by using means such as to withstand high temperatures (650°C), as provided by European standards, and which can be assembled on the same meter in short amounts of time so as to reduce the costs of the operations and the overall costs of the meter. A further object is that of providing such a gas meter which is easy and inexpensive to manufacture and which avoids the use of cable fittings for passing the insulated cable through the wall of the meter.

These objects are achieved by the gas meter in accordance with the invention having the features listed in the appended independent claim 1.

Advantageous embodiments of the invention are disclosed by the dependent claims.

An object of the present invention relates to a flow meter for gas, formed by an upper half-case and by a lower half-case, inside whereof a unit of measurement and shutoff (when necessary) is arranged, composed of at least one electrical/electronic module of measurement and shutoff (when necessary).

The upper half-case and the lower one are joined one to the other by a vertical perimeter strip (also defined here as "reflanged side band") placed around and in proximity of the plane of joining between the upper half-case and the lower one of the meter, which is reflanged above and/or below said plane of joining.

This strip, which is reflanged during the phase of seaming of the two half-cases, has in a zone along its perimeter at least one opening in the form of an indentation, slot or a hollow or recess (furrow or cut).

"Slot", "indentation" here are understood to identify an opening whose profile is continuous and whose perimeter defines a closed figure whereas "hollow", "recess" here are understood to identify an opening in the form of a notch whose perimeter is discontinuous (interrupted) and the profile identifies a figure open on one side.

Said slit or indentation is suitable for being traversed by at least one electrical cable of the flat type which can be with one or more conductive tracks. The aforementioned electrical cable comes from at least one electrical/electronic module of measurement and shutoff (when present), inside the meter, and insulated electrically along its entire length, also at the area of traversing of the meter.

The opening of said slot or indentation has dimensions, preferably at least the dimension along the horizontal plane of abutting of the two half-cases (width), such as to place said slot or indentation substantially in contact, at least in width, with said cable which traverses it so as to act as cable guide.

The passage of said electrical cable through the slot is performed so as to connect said cable to the electrical/electronic module of display and/or data processing (indicator) which is placed on the outer wall of the container of the system of measurement and shutoff (when present) of said meter.

Specific bonding substances are also provided in proximity of the plane of joining between the upper half-case and the lower one of the meter in order to attach integrally said cable to said meter.

Thanks to the use of said strip with slot or indentation formed in proximity of the joining plane between the upper part and the lower one of the meter it is possible to avoid the perforation of the upper or lower half-cases (head or bottom) and also to avoid the use of cable glands and the attachment of the same to the case. This represents a constructional and production advantage in that it is not necessary to add further operations of assembly with respect to those in use, i.e. seaming and sealing, in that also when the cable passing between the head and the bottom is inserted these operations are sufficient for obtaining the present meter as will be described in detail further on.

Said perimeter strip provided with slot or indentation can be integral with the upper half- case or with the lower one; or it can be an independent component, for example a collar to be mounted on said meter; or an independent vertical perimeter annular band to be reflanged completely on the joining plane without departing from the spirit of the invention.

The gas whose flow is measured by the present meter is preferably comburent and/or fuel gas, more preferably natural fuel gas.

The term "comburent" here is understood to identify a substance which acts as oxidising agent of a fuel in a combustion reaction, such as, for example, air. The term "fuel" here is understood to identify a chemical substance which is oxidised in the process of combustion, such as, for example methane.

Further features of the invention will be made clearer by the following detailed description, referred to one of its embodiments purely by way of a non-limiting example illustrated in the accompanying drawings, wherein:
- Figures 1 a) - c): are exploded views, respectively frontal, side and enlarged section of the detail contained in the circle in view b), of a first embodiment of the meter of the present invention, before assembly;
- Figures 2, 3, 4: are sectioned views like Fig. 1 c), illustrating the subsequent phases of assembly of the embodiment of Figs. 1 a) - c);
- Figures 5 a) - c): are respectively a frontal, side and enlarged section view of the detail contained in the circle in view b), of the meter of Figs. 1 a) - c), in an assembled and ready-to-use form;
- Figures 6 a) - c): are exploded views, respectively frontal, side and enlarged section of the detail contained in the circle in view b), of a second embodiment of the meter of the present invention, before assembly;
- Figures 7, 8, 9: are sectioned views like Fig. 6 c), illustrating the subsequent phases of assembly of the embodiment of Figs. 6 a) - c);
- Figures 10 a) - c): are respectively a frontal, side and enlarged section view of the detail contained in the circle in view b), of the meter of Figs. 6 a) - c), in an assembled and ready-to-use form;
- Figures 11 a) - c): are exploded views, respectively frontal and vertical section along line A-A and enlarged section of the detail contained in the circle in view b), of a third embodiment of the meter of the present invention, before assembly;
- Figures 12, 13: are sectioned views like Fig. 11 c), illustrating the subsequent phases of assembly of the embodiment of Figs. 11 a) - c);
- Figures 14 a) - c): are views, respectively frontal, vertical section along line B-B and enlarged section of the detail contained in the circle in view b), during the placing together of the two half-cases;
- Figure 15: is a sectioned view like Fig. 14 c) but illustrating the final phase of mounting by means of reflanging.

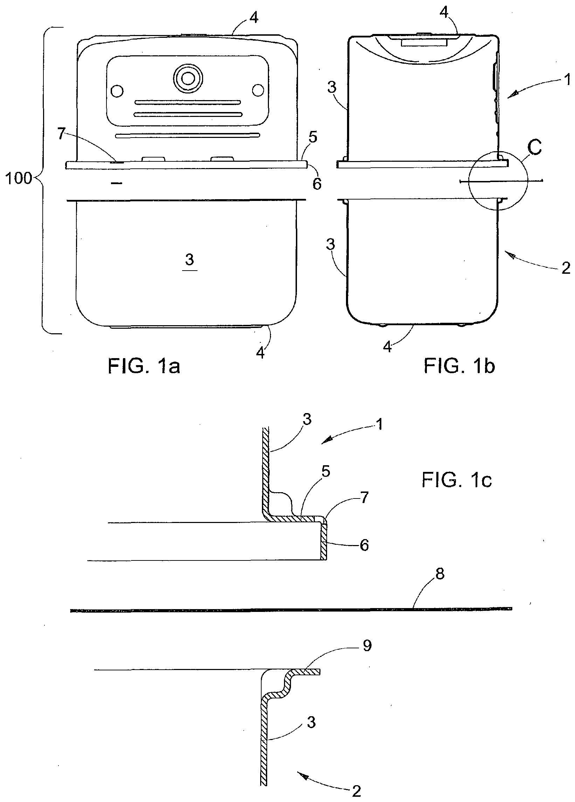

In the first embodiment the gas meter , in accordance with the invention, denoted in Figures 1 a) - c) by reference numeral 100, is formed by a container, generally made of metal, constituted by an upper metal half-case 1, herein also defined as "head", and by a lower metal half-case 2, hereinafter also defined as "bottom". The head 1 and the bottom 2 are elements in themselves known in the art: they are both hollow internally and formed, each, by four vertical walls 3, opposite and parallel two by two, which are joined to a bottom wall 4 by means of tapered unions. Moreover both the head 1 and the bottom 2 are open on one side, lower and upper respectively. However the present head 1 and bottom 2 are distinguished from those known in the art due to the fact of not providing any hole in their side walls in order to make the internal electrical cables exit from the meter.

The head 1 has a lower perimeter edge which projects outwards and perpendicular with respect to the vertical walls 3, so as to form a horizontal planar flange 5 placed perimetrically around the open side (opening) of said head 1.

Said horizontal flange 5 integrates a perimeter band or ring 6, vertical and perpendicular to the flange 5, so as to form together with it a step (Fig. 1c)) with respect to the vertical walls 3 of the head 1. The bottom 2 is provided with an upper perimeter edge which projects outwards and perpendicular with respect to the vertical walls 3 of said bottom 2, so as to form a horizontal planar flange 9 placed perimetrically around the open side of said bottom 2. The flange 5 of the head 1 is suitable for abutting against the horizontal flange 9 of the bottom 2 at the time of coupling the head 1 with said bottom 2 during the assembly.

The horizontal perimeter flanges 5 and 9 are provided also in the case wherein the head 1 and the bottom 2 have a shape different from the box one just described above.

In a portion of said perimeter band 6 and/or said flange 5 an indentation or slot 7 is formed, preferably in the point of joining of the perimeter band 6 with the flange 5 in order to have the slot 7 positioned at the horizontal plane of joining between the head 1 and the bottom 2.

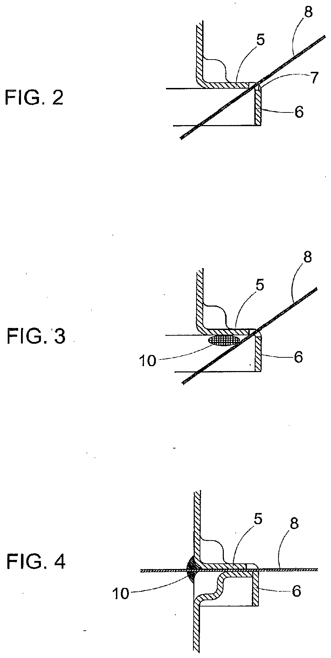

Said slot 7 is suitable for passing at least one flat electrical cable 8 (Fig. 2), coming from one or more electrical/electronic modules of measurement and shut-off (when present), (not illustrated in the drawings) which are positioned inside the meter 100. Said electrical cable 8 exits therefore from said slot 7, projecting therefrom towards the exterior of said container, without any cable fitting.

The portion of cable 8 which traverses the slot 7 also has electrical insulation which does not have to be removed. In fact flat cables are not strippable. Said slot 7 will preferably have a width approximately equal to the width of the cable 8, in order to place said cable 8 substantially in contact, at least laterally, with said slot 7 which traverses it so as to act as guide. In this way the slot 7 will prevent possible side movements of said cable 8. However this slot 7 can also be of such a width as to allow the passage of two more flat cables adjacent one to the other or of a flat cable with one or more conductive tracks, without thereby departing from the scope of the present invention. After having inserted the electrical cable 8 in the slot 7, a layer of sealing adhesive 10 is applied both on the surface of abutting of said flange 9 of the bottom 2 and on the lower surface of the flange 5 of the head 1, as illustrated in Fig. 3. This adhesive 10 allows the cable 8 to be attached, enclosed between said head 1 and said bottom 2, in addition to sealing the meter 100 in respect of the external environment, obtaining gas tightness. In fact the layers of sealing adhesive 10 allow the cable 8, which has already traversed the slot 7, to adhere and attach itself, in an integral manner, both to the flange 5 of the head 1 and to the flange 9 of the bottom 2, after said flange 5 has abutted against the flange 9 in the phase of placing of the head 1 on the bottom 2 during the phase of closure of the meter 100. The pressure exerted on the layers 10 of sealing adhesive during the closure by means of seaming then ensures that said sealing adhesive 10 is spread also along the internal edges of the two half-cases 1 and 2, as illustrated in Fig. 4.

In practice said electrical cable 8 is substantially in contact, above and below, with each of the flanges 5 and 9 seeing that said cable 8 is pressed and held in horizontal position by the aforementioned flanges, without intermediate spacers, and that therefore the final layer of sealant placed between the cable and the flanges is very thin after this pressing.

This contact between the electrical cable and the flanges 5 and 9 is advantageous in that it avoids any possible movement of said electrical cable 8 with respect to said slot 7 also without a cable fitting and to enable the solution to withstand resistance high temperatures.

The sealing adhesive 10 is a liquid seal or putty, of a known type, for example with a polyurethanic base, normally used in the art of gas meters and provided with a high resistance, both chemical and thermal. Said type of sealant, combined with the present mechanical structure, is able to overcome the test of tightness at high temperatures provided by the main reference standards for gas meters. The type of electrical/electronic module of measurement and shutoff (when necessary), positioned inside the meter wherefrom the cable 8 departs, can be of any type, just like the type of device suitable for measuring the gas flow and the relative sensors, for example an electromechanical device or electronic device, without thereby departing from the scope of protection of the present invention.

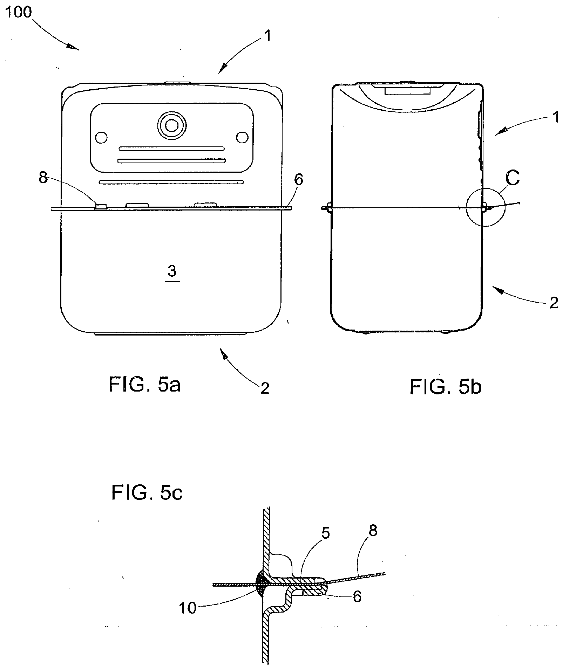

After having placed the head 1 adjacent to the bottom 2 so as to enclose the cable 8 in between said two components, the perimeter band 6 is reflanged on the flange 9 of the bottom 2, more particularly with the reflanging of that portion of annular band 6 below the slit 7, bending this portion below the flange 9 as illustrated in Fig. 5 c). In this way the head 1 is firmly restrained to the bottom 2 with the obtaining of a completely tight closure of the meter 100.

In the case wherein the band 6 is an independent element and not integrated with the upper or lower half-case, the reflanging of the band 6 can be performed, as an alternative to the lower flange 9 or in addition thereto, also on the upper flange 5 without thereby departing from the scope of the invention.

It is preferable to perform a complete 90° reflanging, more particularly below the lower flange 9, in order to ensure a more effective seaming of the lower half-case 2 so as to be further restrained to the upper one 1.

After the closure of the two half-cases the flat cable 8 has to traverse the wall of the meter 100, through the slot 7, substantially at the horizontal joining plane of the head 1 to the bottom 2 of the meter 100, rather than at the front walls of the head 1 or of the bottom 2 as occurs instead in the prior art.

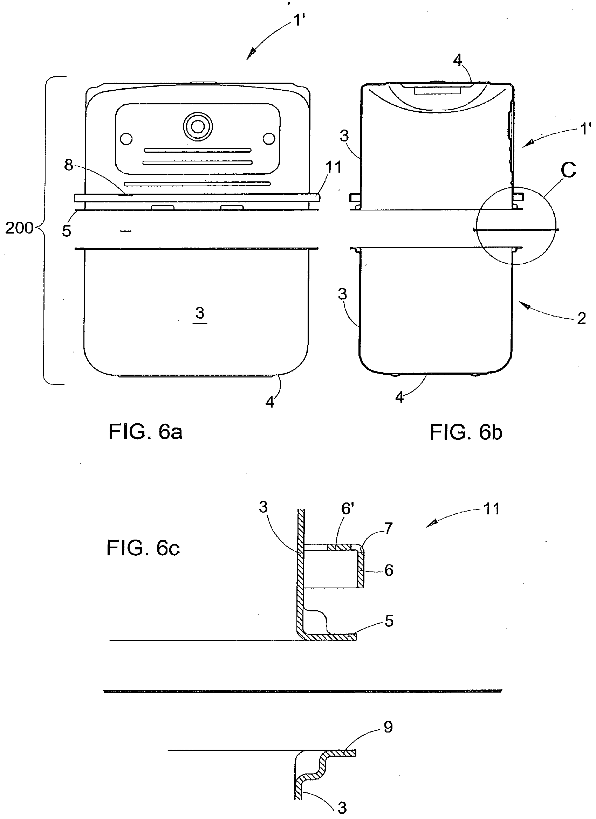

In a second embodiment in accordance with the invention, illustrated in exploded form in Figures 6 a) - c) and denoted by reference numeral 200, it is provided for the annular band or the perimeter ring 6 which is not integral with the flange 5 of the head but it belongs to a collar 11, not integral with the head 1, which is formed by a planar base 6' wherefrom said perimeter ring 6 extends vertically so as to form a step.

Therefore in said second embodiment the lower bottom 2 is substantially similar to the one previously described while the head is different in that it, denoted in Figures 6 - 10 by reference numeral 1', provides the aforementioned collar 11, placed externally around it.

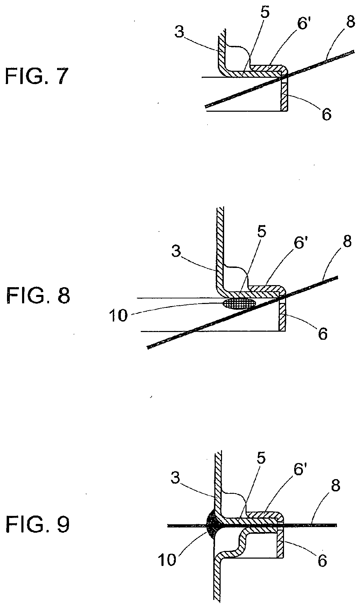

Between said planar base 6' of said collar 11 and the vertical walls 3 of said head there is a certain play which makes said collar 11 freely sliding along the vertical walls 3 of the head 1'. The vertical sliding downwards of said collar 11 is stopped by the flange 5 of the head 1' whereon said planar base 6' of said collar 11 goes to abut at the time of the assembly of the two half-cases. In this second embodiment the indentation or slot 7 suitable for passing the flat electrical cable 8 (Fig. 7) is formed in a portion of perimeter band 6, preferably in the point of joining of said band 6 with the base 6' of the collar 11. The insertion of said cable 8 in said slot 7 takes place preferably after said collar 11 has abutted against the flange 5 of the head 1', as illustrated in Fig. 7.

As illustrated in Fig. 8 also in this second embodiment provision is made for the application of layers of sealing adhesive 10 both on the surface of abutting of said flange 9 of the bottom 2 and on the lower surface of the flange 5 of the head 1', in order to ensure the sealing of the meter 200.

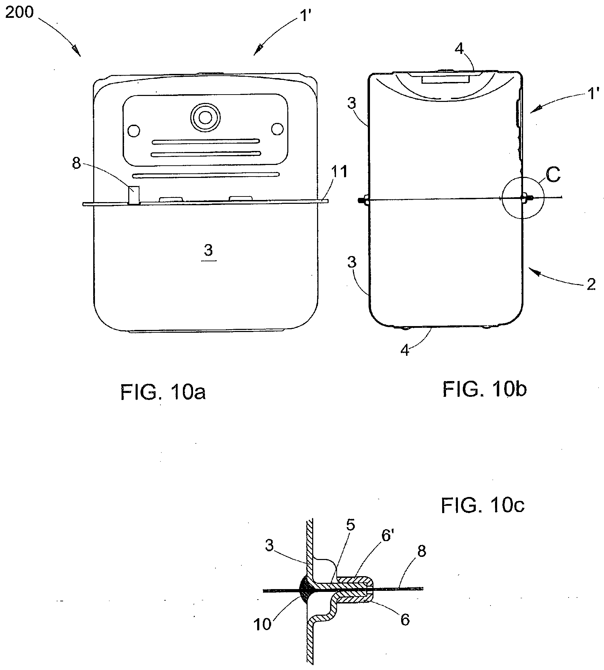

Similarly to what is described previously for the first embodiment, after having placed the bottom 2 adjacent to the head ┌ so as to enclose the cable 8 between the edges of the two half-cases (bottom 2 and head ), a portion of the band 6 of the collar 11 is reflanged on the edge of the bottom 2, more specifically with the reflanging of a portion of the band 6 of the collar 11 which is located below the slot 7, bending this portion below the flange 9 so as to ensure a completely tight closure of the meter 200 as illustrated in Fig. 10 c).

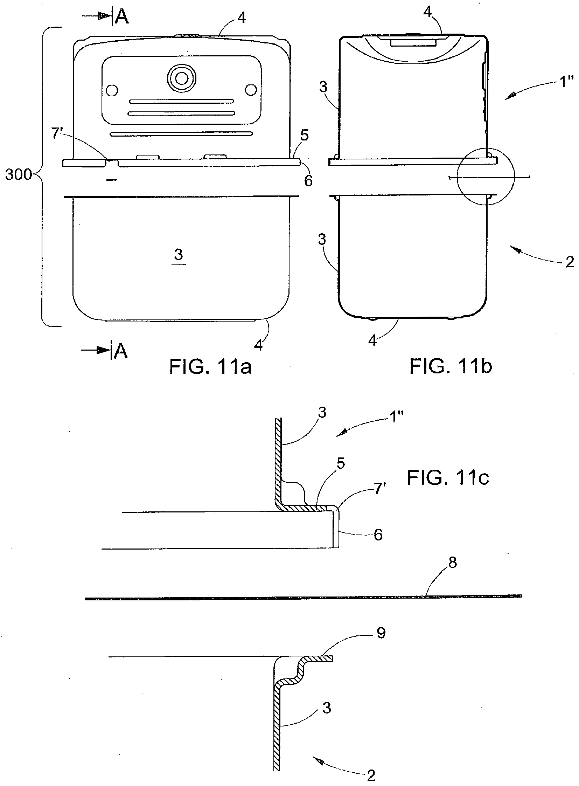

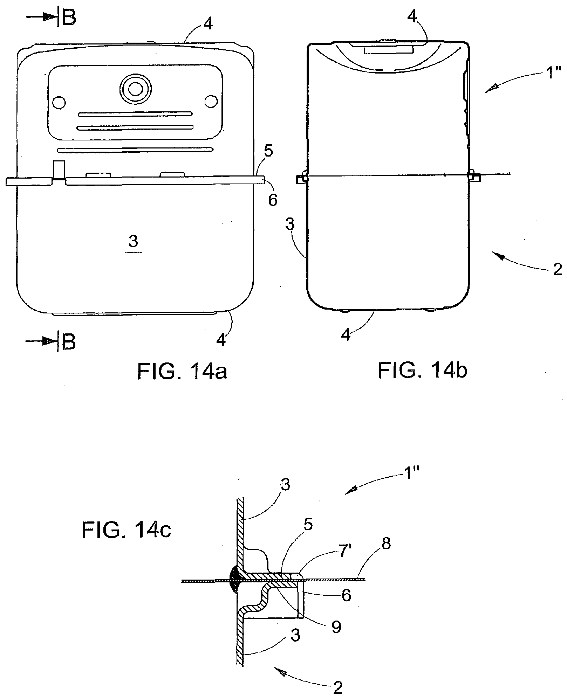

In a third embodiment of the meter in accordance with the invention, illustrated in exploded form in Figures 11 - 15 and denoted by reference numeral 300, the same features indicated for the first embodiment are provided, with the exception of the fact that the slot 7 formed in the annular band or the perimeter ring 6 integral with the flange 5 of the head is in the form of an indentation or recess 7' which goes to interrupt the perimeter continuity of the side band 6 which is integral with the flange 5 of a head (denoted here by reference numeral 1").

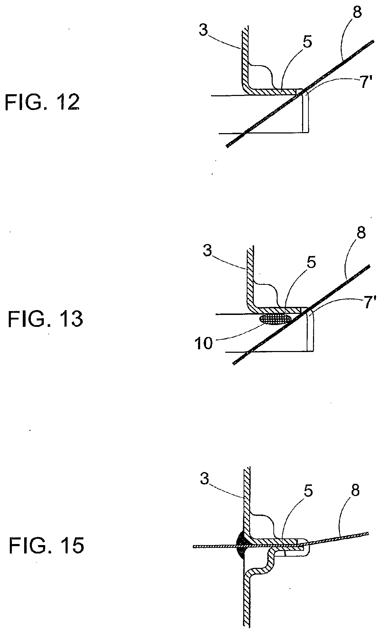

The procedures of mounting of said head 1" to the bottom 2 are substantially identical to those reported in the first embodiment: in this case too, after having inserted the electrical cable 8 in the indentation 7' a layer of sealing adhesive 10 is applied both on the abutting surface of said flange 9 of the bottom 2 and on the lower surface of the flange 5 of the head 1", as illustrated in Fig. 13, then the head 1" is placed adjacent to the bottom 2 so as to enclose, in between the two components 1" and 2, the cable 8, pressing it between the two flanges 5 and 9. Subsequently, the vertical perimeter band 6 is reflanged on the flange 9 of the bottom 2, bending it below the flange 9 as illustrated in Fig. 15, in order to obtain a head 1" firmly restrained to the bottom 2 with a completely tight closure of the meter 300. This embodiment with indentation 7' is particularly advantageous in that it is easier and faster to make with respect to the formation of a slot 7 such as that described in the first embodiment.

The gas meter in accordance with the present invention also provides an indicator placed on said upper half-case (1; 1'; 1") or lower half-case (2) for the display or processing of the measurement of said flow.

The advantages that the gas meter in accordance with the present invention exhibits are many, such as for example a lower overall cost, without prejudice to the tightness performances of the meter, a greater ease of manufacture, a shorter time of assembly, a smaller number of components to be assembled and a greater resistance to high temperatures (650°C) thanks also to the elimination of the cable gland.

One particular advantage lies in the fact that operations of assembly are not added with respect to the usual ones in use and not even additional operations of sealing such as those between the head and the casing which remain such also when the cable is inserted additionally between them.

In practice, thanks to the passage of the flat electrical cable through the slot formed in the means of seaming of the two half-cases it is possible to avoid the use of the cable fitting normally used in the art in order to allow the cable to traverse the walls of the meter: the fact of being pressed and restrained in a horizontal position by the contact, above and below it, with the (metal) flanges 5 and 9 and being substantially in contact, at least laterally, with said slit 7 or indentation 7', ensures that the cable 8 is firmly attached to the meter at the point of outlet therefrom so as to avoid the use of any cable fitting and to make the meter meet the requirements of resistance to high temperatures (650°C).

The present invention is not limited to the particular embodiments described previously and illustrated in the accompanying drawings, but instead numerous detail changes may be made thereto within the reach of the person skilled in the art, without thereby departing from the scope of the same invention, as defined in the appended claims.

## Claims

1. Flow meter for gas (100; 200; 300), preferably comburent and/or fuel gas, more preferably natural fuel gas, in the form of a container constituted, in use, by:
- a metal upper half-case (1; 1'; 1") without holes in its side walls for the passage of electrical cables and provided with a perimeter edge in the form of a first horizontal planar flange (5),
- a metal lower half-case (2) without holes in its side walls for the passage of electrical cables and provided with a perimeter edge in the form of a second horizontal planar flange (9), suitable for abutting, in use, against said first horizontal flange (5), ,
- an indicator placed on said upper half-case (1;1';1") or lower half-case (2) for the display of the measurement of said flow
- at least one flat electrical cable (8), insulated along its entire length, coming from and connected electrically to a unit of measurement and shutoff (when present) made up of one or more electrical/electronic modules of measurement and shutoff (when present) of flow of said gas which are placed inside said meter (100;200;300), the portion of said electrical cable (8) placed inside said container being in direct contact with said gas,
- connection means (6) in the form of a perimeter annular band positioned at the horizontal abutting plane of said first horizontal flange (5) against said second horizontal flange (9), said band having at least one annular portion reflanged on at least one of the two horizontal flanges (5,9) so as to seam said upper half-case (1;1';1") to said lower half- case (2)
**characterised in that**
- said insulated and flat electrical cable (8) exits from said container of said meter (100;200), without any cable fitting, through an opening in the form of slot (7) or indentation (7'), formed in a portion of said flange (5) and positioned at the horizontal abutting plane of said first flange (5) against said second flange (9),
- said electrical cable (8) being substantially in contact with each of said first flange (5) and second flange (9) so as to be pressed and restrained in horizontal position by said horizontal flanges (5,9) so as to avoid the movement of said electrical cable (8) with respect to said slot (7) or said indentation (7'),
- sealing means (10) are further provided, suitable for sealing said cable (8), said upper half-case (1; 1'; 1") and/or said lower half-case (2) of said meter so as to create tightness to said gas.

2. Gas meter according to claim 1, wherein said slot (7) or said indentation (7') having at least one of the dimensions such as to be substantially in contact with said cable (8) which traverses it so as to avoid the movement of said cable (8) in said slot (7) or said indentation (7').

3. Gas meter according to claim 1 or 2 wherein said side band (6) is reflanged below the lower flange (9) and/or above the upper flange (5) by means of bending through 90°, preferably 90° reflanged below the lower flange (9).

4. Gas meter (100;300) according to claim 1 or 2 wherein said reflanged band is integral with said flange (5) of said upper half-case (1;1") or with said flange (9) of said lower half-case (2).

5. Gas meter (200) according to claim 1,2 or 3 wherein said reflanged band is integral with a collar (11) placed around said upper half-case (1') or around said lower half-case (2).

6. Gas meter (100;200;300) according to any one of the preceding claims wherein said sealing means (10) being placed at the horizontal abutting plane of said flange (5) against said flange (9).

7. Gas meter (100;200;300) according to claim 6 wherein said sealing means (10) are in the form of layer of sealing adhesive placed on the abutting surface of said flange (9) and/or on the lower surface of said flange (5).

8. Process for obtaining a gas meter (100;200;300) as defined in any one of the preceding claims, comprising the following steps:
- forming a slot (7) or indentation (7') in a portion of said flange (5) at the horizontal plane which joins said upper half-case (1; 1'; 1") and said lower half-case (2) of said meter (100;200;300);
- passing at least one flat and insulated electrical cable (8) through said slot (7) or said indentation (7');
- positioning said sealing means (10) on said cable (8), said upper half-case (1;1';1") and/or lower half-case (2) of said meter (100;200;300);
- abutting said upper half-case (1;1';1") against said lower half-case (2) of said meter (100;200;300), leaving said cable (8) between said upper and lower half-cases;
- joining said upper half-case (1;1';1") with said lower half-case (2) of said meter (100;200;300) by means of said connection means (6).

9. Process according to claim 8 wherein during the step of positioning of the sealing means (10) the application of a sealing adhesive (10) is provided on the edge of said upper half-case (1; 1';1") and on the edge of said lower half-case (2).

10. Process according to any one of claims 8 or 9 wherein the step of joining said upper half-case (1;1';1") with said lower half-case (2) of said meter (100;200;300) is carried out by reflanging of said band (6) belonging to said upper half-case (1;1") or to said lower half-case (2) or belonging to said collar (11), on the edge of said lower half- case (2) or of said upper half-case (1').

## Patentansprüche

1. Durchflussmesser für Gas (100; 200; 300), vorzugsweise für Brenngas und/oder Heizgas, insbesondere Heiz-Erdgas, in der Form eines Behälters, der bei Anwendung aus Folgendem besteht:
- einem metallischen oberen Halbgehäuse (1; 1'; 1") ohne Löcher in seinen Seitenwänden für den Durchgang von elektrischen Kabeln und versehen mit einer Umfangskante in der Form eines ersten horizontalen ebenen Flansches (5),
- einem metallischen unteren Halbgehäuse (2) ohne Löcher in seinen Seitenwänden für den Durchgang von elektrischen Kabeln und versehen mit einer Umfangskante in der Form eines zweiten horizontalen ebenen Flansches (9), der bei Anwendung zum Anstoßen an den ersten horizontalen Flansch (5) geeignet ist,
- einem Indikator zum Anzeigen der Messung des Stroms, der an dem oberen Halbgehäuse (1; 1'; 1 ") oder unteren Halbgehäuse (2) angeordnet ist
- wenigstens einem flachen elektrischen Kabel (8), das entlang seiner gesamten Länge isoliert ist und von einer Einheit zum Messen und Absperren (wenn vorhanden) kommt und elektrisch damit verbunden ist, bestehend aus einem oder mehreren elektrischen/elektronischen Modulen zum Messen und Absper-ren (wenn vorhanden) des Stroms des Gases, die innerhalb des Messers (100; 200; 300) angeordnet sind, wobei sich der innerhalb des Behälters angeordne-te Abschnitt des elektrischen Kabels (8) in unmittelbarem Kontakt mit dem Gas befindet,
- Verbindungsmitteln (6) in der Form eines ringförmigen Umfangbands, das an der horizontalen anstoßenden Ebene des ersten horizontalen Flansches (5) an den zweiten horizontalen Flansch (9) angeordnet ist, wobei das Band wenigstens einen ringförmigen Abschnitt hat, der an wenigstens einen der zwei horizontalen Flansche (5, 9) umgeflanscht ist, um so das obere Halbgehäuse (1; 1'; 1 ") an das untere Halbgehäuse (2) zu fügen
**dadurch gekennzeichnet, dass**
- das isolierte und flache elektrische Kabel (8) aus dem Behälter des Messers (100; 200), ohne jeglichen Kabelanschluss durch eine Öffnung in der Form eines Schlitzes (7) oder einer Vertiefung (7') austritt, die in einem Abschnitt des Flansches (5) geformt und an der horizontalen anstoßenden Ebene des ersten Flansches (5) an den zweiten Flansch (9) angeordnet ist,
- das elektrische Kabel (8) sich im Wesentlichen in Berührung mit jedem des ersten Flansches (5) und des zweiten Flansches (9) befindet, sodass es durch die horizontalen Flansche (5, 9) in eine horizontale Position gepresst und ein-gespannt wird, um die Bewegung des elektrischen Kabels (8) in Bezug auf den Schlitz (7) oder die Vertiefung (7') zu vermeiden,
- Abdichtungsmittel (10) werden ferner bereitgestellt, geeignet zum Dichten des Kabels (8), des oberen Halbgehäuses (1; 1'; 1") und/oder unteren Halbgehäu-ses (2) des Messers, um Dichtheit für das Gas zu erzeugen.

2. Gaszähler nach Anspruch 1, wobei der Schlitz (7) oder die Vertiefung (7') wenigstens eine der Abmessungen derart haben, dass sie sich im Wesentlichen in Berührung mit dem Kabel (8) befinden, das sie durchquert, um so die Bewegung des Kabels (8) in dem Schlitz (7) oder der Vertiefung (7') zu vermeiden.

3. Gaszähler nach Anspruch 1 oder 2, wobei das Seitenband (6) unterhalb des unteren Flansches (9) und/oder oberhalb des oberen Flansches (5) mittels einer Biegung um 90° umgeflanscht, vorzugsweise 90° unterhalb des unteren Flansches (9) umgeflanscht, ist.

4. Gaszähler (100; 300) nach Anspruch 1 oder 2, wobei das umgeflanschte Band integral mit dem Flansch (5) des oberen Halbgehäuses (1; 1 ") oder mit dem Flansch (9) des unteren Halbgehäuses (2) ist.

5. Gaszähler (200) nach Anspruch 1, 2 oder 3, wobei das umgeflanschte Band integral mit einem um das obere Halbgehäuse (1') oder um das untere Halbgehäuse (2) angeordneten Bund (11) ist.

6. Gaszähler (100; 200; 300) nach einem der vorhergehenden Ansprüche, wobei die Abdichtungsmittel (10) an der horizontalen anstoßenden Ebene des Flansches (5) an den Flansch (9) angeordnet sind.

7. Gaszähler (100; 200; 300) nach Anspruch 6, wobei die Abdichtungsmittel die Form einer Lage eines abdichtenden Klebstoffs haben, die an der anstoßenden Fläche des Flansches (9) und/oder an der unteren Fläche des Flansches (5) angeordnet ist.

8. Verfahren zum Erhalten eines Gaszählers (100; 200; 300) nach einem der vorhergehenden Ansprüche, das die folgenden Schritte umfasst:
- das Formen eines Schlitzes (7) oder einer Vertiefung (7') in einem Abschnitt des Flansches (5) an der horizontalen Ebene, die das obere Halbgehäuse (1; 1'; 1") und das untere Halbgehäuse (2) des Zählers (100; 200; 300) verbindet;
- das Führen wenigstens eines flachen und isolierten elektrischen Kabels (8) durch den Schlitz (7) oder die Vertiefung (7');
- das Anordnen der Abdichtungsmittel (10) an dem Kabel (8), dem oberen Halb-gehäuse (1, 1'; 1") und/oder dem unteren Halbgehäuse (2) des Zählers (100; 200; 300);
- das Anstoßen des oberen Halbgehäuses (1; 1'; 1") an das untere Halbgehäuse (2) des Zählers (100; 200; 300), wobei das Kabel (8) zwischen dem oberen und unteren Halbgehäuse verbleibt;
- das Verbinden des oberen Halbgehäuses (1; 1'; 1") mit dem unteren Halbgehäuse (2) des Zählers (100; 200; 300) mit Hilfe der Verbindungsmittel (6).

9. Verfahren nach Anspruch 8, wobei während des Schrittes des Anordnens der Abdichtungsmittel (10) das Aufbringen eines abdichtenden Klebstoffes (10) an der Kante des oberen Halbgehäuses (1; 1'; 1 ") und an der Kante des un-teren Halbgehäuses (2) bereitgestellt wird.

10. Verfahren nach einem der Ansprüche 8 oder 9, wobei der Schritt des Verbindens des oberen Halbgehäuses (1; 1'; 1 ") mit dem unteren Halbgehäuse (2) des Zählers (100; 200; 300) ausgeführt wird durch das Umflanschen des Bandes (6), das zu dem oberen Halbgehäuse (1; 1 ") oder zu dem unteren Halbgehäuse (2) gehört oder zu dem Bund (11) gehört, an der Kante des unteren Halbgehäuses (2) oder des oberen Halbgehäuses (1').

## Revendications

1. Débitmètre pour gaz (100 ; 200 ; 300), de préférence du gaz comburant et/ou combustible, plus préférablement du gaz combustible naturel, sous la forme d'un conteneur, constitué, lors de l'utilisation, de :
- un demi-boîtier supérieur en métal (1 ; 1'; 1") sans trous dans ses parois latérales pour le passage de câbles électriques et pourvu d'un bord de périmètre sous la forme d'une première bride planaire horizontale (5),
- un demi-boîtier inférieur en métal (2) sans trous dans ses parois latérales pour le passage de câbles électriques et pourvu d'un bord de périmètre sous la forme d'une seconde bride planaire horizontale (9), adaptée pour buter, lors de l'utilisation, contre ladite première bride horizontale (5),
- un indicateur placé sur ledit demi-boîtier supérieur (1 ; 1'; 1 ") ou demi-boîtier inférieur (2) pour l'affichage de la mesure dudit débit,
- au moins un câble électrique plat (8), isolé le long de la totalité de sa longueur, partant de et raccordé électriquement à une unité de mesure et de coupure (le cas échéant), constituée d'un ou plusieurs modules électriques/électroniques de mesure et de coupure (le cas échéant) de débit dudit gaz qui sont placés à l'intérieur dudit compteur (100 ; 200 ; 300), la portion dudit câble électrique (8) placée à l'intérieur dudit conteneur étant en contact direct avec ledit gaz,
- un moyen de raccordement (6) sous la forme d'une bande annulaire de périmètre, positionné au niveau du plan de butée horizontal de ladite première bride horizontale (5) contre ladite seconde bride horizontale (9), ladite bande ayant au moins une portion annulaire rebordée sur au moins une des deux brides horizontales (5, 9) de manière à faire un joint entre ledit demi-boîtier supérieur (1 ; 1'; 1") et ledit demi-boîtier inférieur (2)
**caractérisé en ce que**
- ledit câble électrique isolé et plat (8) ressort dudit conteneur dudit compteur (100 ; 200), sans aucun presse-étoupe, à travers une ouverture sous la forme d'une fente (7) ou d'une encoche (7'), formée dans une portion de ladite bride (5) et positionnée au niveau du plan de butée horizontal de ladite première bride (5) contre ladite seconde bride (9),
- ledit câble électrique (8) étant substantiellement en contact avec chacune de ladite première bride (5) et seconde bride (9) de manière à être pressé et retenu dans une position horizontale par lesdites brides horizontales (5, 9) afin d'éviter le mouvement dudit câble électrique (8) par rapport à ladite fente (7) ou à ladite encoche (7'),
- des moyens d'étanchéité (10) étant en outre prévus, adaptés pour rendre étanche ledit câble (8), ledit demi-boîtier supérieur (1 ; 1'; 1") et/ou ledit demi-boîtier inférieur (2) dudit compteur pour créer une étanchéité audit gaz.

2. Compteur de gaz selon la revendication 1, dans lequel ladite fente (7) ou ladite encoche (7') a au moins une des dimensions de manière à être substantiellement en contact avec ledit câble (8) qui la traverse de manière à éviter le mouvement dudit câble (8) dans ladite fente (7) ou dans ladite encoche (7').

3. Compteur de gaz selon la revendication 1 ou 2, dans lequel ladite bande latérale (6) est rebordée au-dessous de la bride inférieure (9) et/ou au-dessus de la bride supérieure (5) au moyen d'une flexion à 90°, de préférence rebordée à 90° au-dessous de la bride inférieure (9).

4. Compteur de gaz (100 ; 300) selon la revendication 1 ou 2, dans lequel ladite bande rebordée est en un seul tenant avec ladite bride (5) dudit demi-boîtier supérieur (1 ; 1") ou avec ladite bride (9) dudit demi-boîtier inférieur (2).

5. Compteur de gaz (200) selon la revendication 1, 2 ou 3, dans lequel ladite bande rebordée est en un seul tenant avec un collier (11) placé autour dudit demi-boîtier supérieur (1') ou autour dudit demi-boîtier inférieur (2).

6. Compteur de gaz (100; 200; 300) selon une quelconque des revendications précédentes, dans lequel lesdits moyens d'étanchéité (10) sont placés au niveau du plan de butée horizontal de ladite bride (5) contre ladite bride (9).

7. Compteur de gaz (100 ; 200 ; 300) selon la revendication 6, dans lequel lesdits moyens d'étanchéité (10) prennent la forme d'une couche d'adhésif d'étanchéité placée sur la surface de butée de ladite bride (9) et/ou sur la surface inférieure de ladite bride (5).

8. Processus d'obtention d'un compteur de gaz (100 ; 200 ; 300) tel que défini dans une quelconque des revendications précédentes, comprenant les étapes suivantes consistant à :
- former une fente (7) ou une encoche (7') dans une portion de ladite bride (5) au niveau du plan horizontal qui joint ledit demi-boîtier supérieur (1 ; 1'; 1") et ledit demi-boîtier inférieur (2) dudit compteur (100 ; 200 ; 300) ;
- faire passer au moins un câble électrique plat et isolé (8) à travers ladite fente (7) ou ladite encoche (7') ;
- positionner lesdits moyens d'étanchéité (10) sur ledit câble (8), ledit demi-boîtier supérieur (1 ; 1'; 1") et/ou ledit demi-boîtier inférieur (2) dudit compteur (100 ; 200 ; 300) ;
- faire buter ledit demi-boîtier supérieur (1 ; 1'; 1") contre ledit demi-boîtier inférieur (2) dudit compteur (100 ; 200 ; 300), en laissant ledit câble (8) entre lesdits demi-boîtiers supérieur et inférieur ;
- joindre ledit demi-boîtier supérieur (1 ; 1'; 1 ") audit demi-boîtier inférieur (2) dudit compteur (100 ; 200 ; 300) au moyen dudit moyen de raccordement (6).

9. Processus selon la revendication 8, dans lequel pendant l'étape de positionnement des moyens d'étanchéité (10), l'application d'un adhésif d'étanchéité (10) est prévue sur le bord dudit demi-boîtier supérieur (1 ; 1'; 1") et sur le bord dudit demi-boîtier inférieur (2).

10. Processus selon une quelconque des revendications 8 ou 9, dans lequel l'étape de jonction dudit demi-boîtier supérieur (1 ; 1'; 1") avec ledit demi-boîtier inférieur (2) dudit compteur (100 ; 200 ; 300) est effectuée par rebordage de ladite bande (6) appartenant audit demi-boîtier supérieur (1 ; 1") ou audit demi-boîtier inférieur (2) ou appartenant audit collier (11), sur le bord dudit demi-boîtier inférieur (2) ou dudit demi-boîtier supérieur (1').
